# EUROPÄISCHE PATENTSCHRIFT

(11) **EP 1 088 977 B1**
(45) Veröffentlichungstag und Bekanntmachung des Hinweises auf die Patenterteilung: **13.09.2006**
(21) Anmeldenummer: 00117327.7
(22) Anmeldetag: 21.08.2000
(51) Int. Cl.: F02D 33/02, F02D 41/00, F02M 35/00, F02D 41/14

(54) **Verfahren zur Regelung eines Ansaugvolumens von Brennkraftmaschinen mit Mehrfachansaugsystemen**
Method to control the intake air volume of an internal combustion engine with multiple intake
Méthode pour contrôler la quantité d'air aspirée par un moteur à tubulures d'admission multiples

(30) Priorität: 29.09.1999 DE 19946634
(43) Veröffentlichungstag der Anmeldung: 04.04.2001
(73) Patentinhaber: Volkswagen Aktiengesellschaft, 38436 Wolfsburg (DE)
(72) Erfinder: Heinrich, Axel, Dr., 38527 Meine (DE); Waschatz, Uwe, Dr., 38527 Meine (DE); Panse, Mirco, 38551 Ribbesbüttel (DE); Wehling, Wolfgang, 38112 Braunschweig (DE)

(56) Entgegenhaltungen:
- WO-A-93/00505
- DE-A- 3 630 086
- DE-A- 19 733 106
- US-A- 3 741 042
- US-A- 5 515 828
- PATENT ABSTRACTS OF JAPAN vol. 017, no. 322 (M-1432), 18. Juni 1993 (1993-06-18) & JP 05 033680 A (MITSUBISHI MOTORS CORP), 9. Februar 1993 (1993-02-09)

## Beschreibung

Die Erfindung betrifft ein Verfahren zur Regelung eines Ansaugvolumens von Brennkraftmaschinen mit Mehrfachansaugsystemen mit den im Oberbegriff des Anspruchs 1 genannten Merkmalen.

Brennkraftmaschinen, wie beispielsweise Acht- oder Zwölfzylindermotoren, werden häufig in zumindest zwei Motorbänke unterteilt. Den Motorbänken ist jeweils ein separates Ansaugsystem zugeordnet. Solche Ansaugsysteme umfassen Stellmittel oder Stellorgane, wie beispielsweise eine Drosselklappe mit zugeordnetem Drosselklappenregler. Über den Drosselklappenregler wird ein Drosselklappenwinkel (Stellgröße) geregelt und damit das Ansaugvolumen in einem Saugrohr beeinflußt. Trotz weitestgehender Gleichheit der konstruktiven Rahmenbedingungen und gleicher Motorabstimmung hat es sich gezeigt, daß die Motorbänke derartiger Brennkraftmaschinen unterschiedlich stark beansprucht werden. Derartige Phänomene können unter anderem insbesondere auf geringfügige Bautoleranzen der Drosselklappen zurückgeführt werden, die einen sehr steilen Kennlinienverlauf für ihre Durchlaufcharakteristiken besitzen.

Unabhängig davon, ob sich eine Leistungsanforderung an die Brennkraftmaschine im Zuge einer Konstantfahrt, eines Beschleunigungs- oder Verzögerungsvorganges ergibt, führt eine unterschiedlich starke Beanspruchung der Motorbänke zu einer ungleichen Belastung derselben. Zwar führen besagte Abweichungen der Drehmomente nicht zu einer Leistungsänderung, da von den Brennkraftmaschinen nur ein mittleres Drehmoment übertragen wird, jedoch resultiert aus einer höheren Belastung einer Motorbank eine Verkürzung der Lebensdauer der gesamten Brennkraftmaschine.

Dem erfindungsgemäßen Verfahren liegt daher die Aufgabe zugrunde, einen Drehmomentenunterschied in den Motorbänken zu erfassen, und durch eine geeignete Regelung zu kompensieren.

Erfindungsgemäß wird diese Aufgabe durch ein Verfahren zur Regelung des Ansaugvolumens von Brennkraftmaschinen mit Mehrfachansaugsystemen mit den im Anspruch 1 genannten Merkmalen gelöst. Dadurch, daß
(a) für jede Motorbank ein Drehmoment anhand einer drehmomentäquivalenten Größe ermittelt wird und
(b) die Drehmomente miteinander verglichen und in Abhängigkeit von einer Abweichung der Drehmomente wenigstens eine das Ansaugvolumen beeinflussende Stellgröße der Stellmittel eines Ansaugsystems geändert wird,
ist es in einfacher Weise möglich, den Drehmomentenunterschied zwischen den Motorbänken zu nivellieren.
Da eine direkte Erfassung des Drehmomentes nicht möglich ist, wird in bevorzugter Weise als drehmomentäquivatente Größe ein Kraftstoffmassenstrom genutzt. Der Kraftstoffmassenstrom wiederum läßt sich besonders exakt in Form einer normierten Einspritzzeit erfassen. Das Kraftstoff-Luft-Verhältnis beider Motorbänke dient dabei als Führungsgröße. Die Lambdaregelung ist somit aktiv.

Als drehmomentäquivalente Größe kann nach einer weiteren bevorzugten Ausführungsform auch ein Zylinderinnendruck herangezogen werden.

Ein bevorzugtes Stellmittel des Ansaugsystems ist die Drosselklappe mit Drosselklappenregler, und damit ist die Stellgröße der Drosselklappenwinkel, über den sich das Ansaugvolumen der jeweiligen Motorbank regulieren läßt.

Die Ermittlung der Stellgröße kann bevorzugt derart erfolgen, daß zunächst ein Ist-Soll-Vergleich der Stellgröße durchgeführt wird. Eine Abweichung des Ist-Wertes von dem Soll-Wert der Stellgröße liefert dabei einen Korrekturwert für den Drosselklappenregler.

Über ein Kennfeld oder ein Modell lassen sich den Stellgrößen jeweils Parameter des Ansaugsystems, beispielsweise ein Luftmassenstrom bei einem gegebenen Drosselklappenwinkel, zuordnen. In Abhängigkeit von der Höhe des Korrekturwertes kann nun eine Neuzuordnung der Parameter zu den Stellgrößen erfolgen (Adaption). Dieser selbstregulative Prozeß kann beispielsweise nach dem Überschreiten des Korrekturwertes über einen vorgegebenen Grenzwert initiiert werden. Insgesamt ist es somit möglich, den Regelungsumfang stark zu begrenzen und bereits im Vorfeld vorhandene Drehmomentenunterschiede zu begleichen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Ansicht einer Brennkraftmaschine mit einem Mehrfachansaugsystem und
- Figuren 2 und 3: zwei Blockschaltbilder für ein Verfahren zur Regelung eines Ansaugvolumens der Brennkraftmaschine.

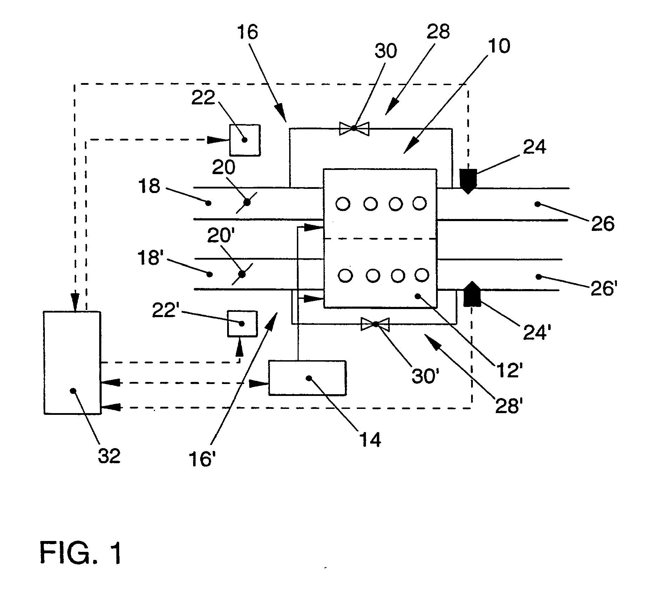

Figur 1 zeigt eine Brennkraftmaschine 10, die aus zwei Motorbänken 12, 12' besteht. Der Brennkraftmaschine 10 ist ein Einspritzsystem 14 zugeordnet, mit dem sich ein Einspritzbeginn, eine Einspritzdauer und eine eingespritzte Kraftstoffmenge für jede Motorbank 12, 12' separat regeln läßt.

Weiterhin besitzt die Brennkraftmaschine 10 ein Mehrfachansaugsystem, das in diesem Fall aus je zwei Ansaugsystemen 16, 16' für jede Motorbank 12, 12' besteht. Die Ansaugsysteme 16, 16' umfassen Stellmittel zur Beeinflussung eines Ansaugvolumens innerhalb der Saugrohre 18, 18'. Derartige Stellmittel können beispielsweise eine Drosselklappe 20, 20' mit einem zugehörigen Drosselklappenregler 22, 22' sein. Über den Drosselklappenregler 22, 22' läßt sich ein Drosselklappenwinkel einstellen und damit eine Durchflußcharakteristik der Ansaugluft durch das Saugrohr 18, 18' ändern.

Beide Motorbänke 12, 12' werden gemäß dem Ausführungsbeispiel lambdageregelt. Dazu ist abgasseitig jeweils mindestens eine Lambdasonde 24, 24' in einem Abgaskanal 26, 26' der Brennkraftmaschine 10 angeordnet. Die Lambdaregelung der Brennkraftmaschine 10 kann beispielsweise über jeweils den Motorbänken 12, 12' zugeordnete Abgasrückführeinrichtungen 28, 28' erfolgen, indem unter anderem ein Abgasrückführventil 30, 30' geregelt wird. Derartige Verfahren sind bekannt und sollen daher an dieser Stelle nicht näher erläutert werden. Festzuhalten bleibt lediglich, daß es sich als vorteilhaft erwiesen hat, die Steuerung der einzelnen, der Brennkraftmaschine 10 zugeordneten Komponenten über ein Motorsteuergerät 32 durchzuführen. In dem Motorsteuergerät 32 werden demnach laufend Betriebsparameter der Brennkraftmaschine 10 erfaßt, bewertet und nachfolgend beispielsweise die Abgasrückführeinrichtungen 28, 28' oder das Einspritzsystem 14 angesteuert.

Eine andere Abgasregelung oder Art der O₂-Konzentrationserfassung ist ebenfalls denkbar.

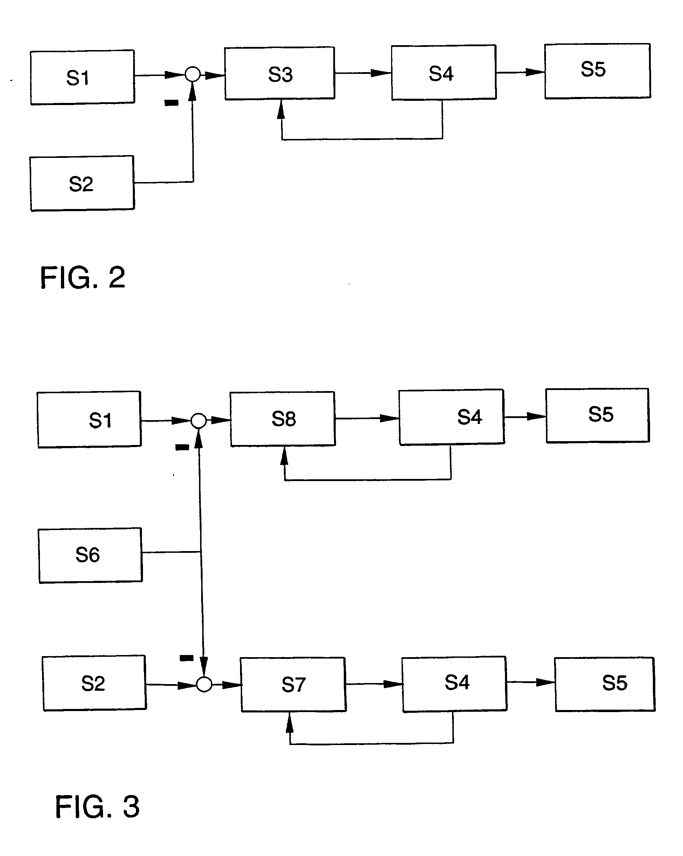

Die Drehmomente der Motorblöcke 12, 12' können sich trotz weitestgehend gleicher konstruktiver Rahmenbedingungen und gegebenenfalls gleicher Motorabstimmung unterscheiden. Eine erneute Angleichung der Drehmomente der Motorbänke 12, 12' wird im folgenden in der Figur 2 anhand eines Blockschaltbildes näher erläutert. Gemäß diesem Ausführungsbeispiel erfolgt eine Änderung des Drehmomentes nur für eine der beiden Motorbänke 12, 12'.

Zunächst wird eine normierte Einspritzzeit t der Motorbank 12 (Schritt S1) und eine normierte Einspritzzeit t' der Motorbank 12' (Schritt 2) ermittelt. Die Einspritzzeiten t, t' eignen sich zur Charakterisierung eines Kraftstoffmassenstroms, da sie besonders exakt erfaßbar sind. Der Kraftstoffmassenstrom wiederum ist eine drehmomentäquivalente Größe, so daß die normierten Einspritzzeiten t, t' ein Maß für das Drehmoment der Motorbänke 12, 12' sind.

Da die Einspritzzeiten bei Lambdaregelung der Brennkraftmaschine 10 nicht nur von einem Luftmassenstrom abhängig sind, sondern gegebenenfalls auch von einer Batteriespannung des jeweiligen Einspritzsystems, ist eine Normierung notwendig. Die Batteriespannung hat insofern Einfluß auf die Einspritzzeit, als daß bei niedriger Spannung die Ventilansteuerung langsamer ist und daher ein Batteriespannungskorrekturwert bei der Festlegung der Einspritzzeiten mit einfließt. Zur Ermittlung der normierten Einspritzzeiten t, t' wird der Batteriespannungskorrekturwert wieder herausgerechnet.

Die beiden normierten Einspritzzeiten t, t' werden anschließend miteinander verglichen. Entsprechend einer Differenz der normierten Einspritzzeiten t, t' erfolgt in einem Schritt S3 zunächst eine Zuordnung der normierten Einspritzzeiten t, t' zu den jeweiligen Drehmomenten. Diese Zuordnung kann anhand eines Kennfeldes oder eines Modells erfolgen. Gleichzeitig sind durch dieses Kennfeld/Modell den ermittelten Drehmomenten jeweils ein Drosselklappenwinkel zugeordnet. Aus der normierten Einspritzzeit t' der Motorbank 12' ergibt sich ein Soll-Wert für den Drosselklappenwinkel, während die normierte Einspritzzeit t der Motorbank 12 einen Ist-Wert für den Drosselklappenwinkel liefert.

In einem Schritt S4 erfolgt ein Abgleich der beiden Stellgrößen (Ist/Soll-Vergleich), der einen Korrekturwert K_{W} für den Drosselklappenwinkel der Drosselklappe 20 des Ansaugsystems 16 liefert. Letztendlich wird über den Drosselklappenwinkelregler 22 dann entsprechend dem Korrekturwert K_{W} der Drosselklappenwinkel der Drosselklappe 20 geändert (Schritt S5) und das Drehmoment der Motorbank 12 und das Drehmoment der Motorbank 12' angeglichen.

Überschreitet der Korrekturwert K_{W} in dem Schritt S4 einen vorgegebenen Grenzwert G_{W}, so kann gleichzeitig das bei der Ermittlung des Korrekturwertes K_{W} zugrundeliegende Modell/Kennfeld neu festgelegt werden. Die Adaption des Kennfeldes/Modells vermindert damit den Regelungsumfang, wenn beispielsweise die Drehmomente der Motorbänke 12, 12 ' mit zunehmender Lebensdauer auseinanderdriften.

Die Figur 3 zeigt ein alternatives Verfahren, mit dem ebenfalls eine Regelung des Drehmomentes ermöglicht wird. Im Gegensatz zu dem in der Figur 2 skizzierten Ausführungsbeispiel werden in diesem Fall beide Drosselklappen 20, 20' beim Vorliegen eines Drehmomentenunterschiedes angesteuert. Daher ist der absolute Regelungsbedarf im Bereich einer Motorbank 12, 12' verringert.

Zunächst wird in einem Schritt S6 ein gemitteltes Drehmoment aus den jeweiligen Drehmomenten der Motorbänke 12, 12' berechnet, wobei das Drehmoment wiederum in Form der normierten Einspritzzeiten t, t' in die Berechnung einfließt und eine gemittelte Einspritzzeit liefert. Analog dem Schritt S3 des vorherigen Ausführungsbeispiels werden in den Schritten S7 und S8 die Abweichungen der normierten Einspritzzeiten t, t' von der mittleren Einspritzzeit bewertet. Für jede Motorbank 12, 12' ist selbstverständlich ein separates Kennfeld/Modell notwendig. Anschließend wird, wie bereits beim Schritt S4 des vorherigen Modells erläutert, jeweils ein Korrekturwert K_{W} gebildet (Schritt S4) und die Drosselklappen 20 beziehungsweise 20' mittels der Drosselklappenregelung 22 beziehungsweise 22'.

## Patentansprüche

1. Verfahren zur Regelung eines Ansaugvolumens von Brennkraftmaschinen mit Mehrfachansaugsystemen, wobei die Brennkraftmaschine in zumindest zwei Motorbänke unterteilt ist, die jeweils ein separates Ansaugsystem aufweisen und die Ansaugsysteme Stellmittel zur Beeinflussung des Ansaugvolumens umfassen,
**dadurch gekennzeichnet, daß**
(a) für jede Motorbank ein Drehmoment anhand einer drehmomentäquivalenten Größe ermittelt wird und
(b) die Drehmomente miteinander verglichen und in Abhängigkeit von einer Abweichung der Drehmomente wenigstens eine das Ansaugvolumen beeinflussende Stellgröße der Stellmittel eines Ansaugsystems geändert wird.

2. Verfahren nach den Anspruch 1,
**dadurch gekennzeichnet, daß**
die drehmomentäquivalente Größe ein Kraftstoffmassenstrom ist.

3. Verfahren nach Anspruch 2,
**dadurch gekennzeichnet, daß**
der Kraftstoffmassenstrom in Form einer normierten Einspritzzeit erfaßt wird.

4. Verfahren nach den Anspruch 1,
**dadurch gekennzeichnet, daß**
die drehmomentäquivalente Größe ein Zylinderinnnendruck wenigstens eines Zylinders der Verbrennungskraftmaschine ist.

5. Verfahren nach einem der vorhergehenden Ansprüche,
**dadurch gekennzeichnet, daß**
das Ansaugsystem eine Drosselklappe und einen Drosselklappenregler umfaßt und die Stellgröße ein Drosselklappenwinkel ist.

6. Verfahren nach einem der vorhergehenden Ansprüche,
**dadurch gekennzeichnet, daß**
ein Ist/Soll-Vergleich der Stellgröße einen Korrekturwert für einen Drosselklappenregler liefert.

7. Verfahren nach Anspruch 6,
**dadurch gekennzeichnet, daß**
den Stellgrößen über ein Kennfeld oder ein Modell jeweils Parameter des Ansaugsystems, insbesondere ein Luftmassenstrom bei einem gegebenen Drosselklappenwinkel, zugeordnet sind und in Abhängigkeit von der Höhe des Korrekturwertes eine Neuzuordnung der Parameter zu den Stellgrößen erfolgt (Adaption).

8. Verfahren nach Anspruch 7,
**dadurch gekennzeichnet, daß**
die Adaption des Kennfeldes oder Modells erst nach dem Überschreiten des Korrekturwertes über einen vorgegebenen Grenzwert erfolgt.

9. Verfahren nach einem der vorhergehenden Ansprüche,
**dadurch gekennzeichnet, daß**
zunächst ein gemitteltes Drehmoment aus den jeweiligen Drehmomenten der Motorbänke berechnet wird und die Stellgrößen für die Ansaugsysteme der Motorbänke entsprechend einer Abweichung des gemittelten Drehmoments von dem jeweiligen Drehmoment festgelegt werden.

## Claims

1. Method for controlling an intake air volume of internal combustion engines having multiple air intake systems, the internal combustion engine being divided into at least two cylinder banks each having a separate air intake system and the air intake systems comprising control means for influencing the intake air volume, **characterized in that**
(a) for each cylinder bank a torque is determined from a torque-equivalent variable and
(b) the torques are compared with one another and at least one control variable of the control means of one air intake system influencing the intake air volume is adjusted as a function of any difference in the torques.

2. Method according to Claim 1, **characterized in that** the torque-equivalent variable is a fuel mass flow.

3. Method according to Claim 2, **characterized in that** the fuel mass flow is determined in the form of a scaled duration of injection.

4. Method according to Claim 1, **characterized in that** the torque-equivalent variable is an internal cylinder pressure of at least one cylinder of the internal combustion engine.

5. Method according to any one of the preceding claims, **characterized in that** the air intake system comprises a throttle valve and a throttle valve regulator and the control variable is a throttle valve angle.

6. Method according to any one of the preceding claims, **characterized in that** an actual/set-point comparison for the control variable supplies a correction value for a throttle valve regulator.

7. Method according to Claim 6, **characterized in that** parameters of the air intake system, in particular an air mass flow at a given throttle valve angle, are assigned to each of the control variables by way of a characteristics map or a model and that the parameters are reassigned to the control variables as a function of the magnitude of the correction value (adaptation).

8. Method according to Claim 7, **characterized in that** the adaptation of the characteristics map or model ensues only once the correction value exceeds a predetermined limit.

9. Method according to any one of the preceding claims, **characterized in that** an average torque is first calculated from the torques of each of the cylinder banks and the control variables for the air intake systems of the cylinder banks are determined according to any deviation of the average torque from the respective torque.

## Revendications

1. Procédé de régulation d'un volume d'admission de moteurs à combustion interne avec des systèmes d'admission multiples, dans lequel le moteur à combustion interne est divisé en au moins deux bancs de moteur, qui présentent chacun un système d'admission séparé et dans lequel les systèmes d'admission comprennent des actionneurs pour influencer le volume d'admission,
**caractérisé en ce que**
(a) pour chaque banc de moteur, on détermine un couple à l'aide d'une valeur équivalent au couple et
(b) les couples sont comparés les uns aux autres et en fonction d'un écart des couples, au moins une valeur de réglage des actionneurs d'un système d'admission influençant le volume d'admission est modifiée.

2. Procédé selon la revendication 1,
**caractérisé en ce que**
la valeur équivalent au couple est un débit massique de carburant.

3. Procédé selon la revendication 2,
**caractérisé en ce que**
le débit massique de carburant est détecté sous forme d'un temps d'injection normalisé.

4. Procédé selon la revendication 1,
**caractérisé en ce que**
la valeur équivalent au couple est une pression interne du cylindre d'au moins un cylindre du moteur à combustion interne.

5. Procédé selon l'une quelconque des revendications précédentes,
**caractérisé en ce que**
le système d'admission comprend un papillon et un régulateur de papillon et la valeur de réglage est un angle de papillon.

6. Procédé selon l'une quelconque des revendications précédentes,
**caractérisé en ce qu'**
une comparaison valeur réelle/valeur de consigne de la valeur de réglage fournit une valeur de correction pour un régulateur de papillon.

7. Procédé selon la revendication 6,
**caractérisé en ce que**
l'on associe aux valeurs de réglage, par le biais d'un champ caractéristique ou d'un modèle, des paramètres respectifs du système d'admission, notamment un débit massique d'air pour un angle de papillon donné, et une nouvelle affectation de paramètres aux valeurs de réglage est effectuée en fonction de la mesure de la valeur de correction (adaptation).

8. Procédé selon la revendication 7,
**caractérisé en ce que**
l'adaptation du champ caractéristique ou du modèle s'effectue seulement après un dépassement de la valeur de correction au-dessus d'une valeur limite prédéfinie.

9. Procédé selon l'une quelconque des revendications précédentes,
**caractérisé en ce**
**qu'**un couple moyenné à partir des couples respectifs des bancs du moteur est d'abord calculé et les valeurs de réglage pour les systèmes d'admission des bancs du moteur sont établies en fonction d'un écart du couple moyenné du couple respectif.
